# EUROPEAN PATENT APPLICATION

(11) **EP 2 546 813 A1**
(43) Date of publication of application: **16.01.2013**
(21) Application number: 11187481.4
(22) Date of filing: 02.11.2011
(51) Int. Cl.: G08B 13/196, G08B 13/19, G08B 13/16, H04N 7/18, E06B 7/30, H04N 5/225

(54) **Home surveillance device**

(30) Priority: 11.07.2011 TW 100124509; 18.07.2011 TW 100125329
(71) Applicant: Brinno Incorporated, Taipei (TW)
(72) Inventor: Yeh, Min-Hsiung, Taipei (TW)
(74) Representative: Viering, Jentschura & Partner

(57) **Abstract**

A home surveillance device comprises a body, a module board, a vibration sensation module, a power supply module, a cover board, and a plate-like member. The body includes a housing having a first casing with a control interface and a second casing containing at least one accommodation space, an assembly member and a casing through-hole. The module board is arranged inside the housing and includes an image-capture module, a display module, a driving module, a microprocessor, a register module, a memory card module, and an I/O module. The vibration sensation module is arranged in the accommodation space. The power supply module connects with the module board and supplies power to the system. The cover board has an assembly through-hole and is assembled to the second casing and opposite to the first casing. The plate-like member has a plate through-hole and is assembled to the assembly member via the assembly through-hole.

## Description

### BACKGROUND OF THE INVENTION

### Field of the Invention

The present invention relates to a home surveillance device, particularly to a home surveillance device triggered by vibration or temperature.

### Description of the Related Art

No matter whether one's residence is in a townhouse, an apartment, or a mansion, the door thereof normally has a peephole. When a visitor rings the doorbell or knocks the door, the resident can examine the visitor via the peephole before he decides whether to open the door. However, the conventional peephole provides limited vision field. Further, the user cannot watch the visitor unless his eye approaches the peephole. Therefore, the conventional peephole is somewhat inconvenient for the user.

Thus, there are digital peephole devices developed to solve the problems of the conventional peephole, wherein the lens captures the image of the visitor, and wherein the user identifies the visitor or the external status via the image presented on the screen. However, the screen of the conventional digital peephole device cannot present images unless the user turns on the screen. If the host is not at home or does not hear the visitor knock the door, he may either miss something important or fail to learn the external condition. In such a case, a thief may have a chance to steal the properties.

Based on many years' experience in the concerned field, the Inventor has been devoted to researching and innovating and finally proposes a home surveillance device to overcome the problems of the conventional technologies.

### SUMMARY OF THE INVENTION

A first objective of the present invention is to provide a home surveillance device, wherein a vibration sensation module is arranged in the home surveillance device and triggers the home surveillance device to capture images or sounds according to doorbell ringing or external force-induced door vibration. The home surveillance device of the present invention comprises a body, a module board, a vibration sensation module, a power supply module, a cover board, and a plate-like member.

The body includes a housing having a first casing and a second casing assembled to the first casing, wherein the first casing has a control interface, and wherein the second casing has a plurality of accommodation spaces, an assembly member and a casing through-hole.

The module board is arranged inside the housing and has an image-capture module capturing images; a display module presenting the images captured by the image-capturing module and the menus of the control interface; a driving module connecting with the image-capture module and the display module and triggering the image-capture module and the display module according to an external signal; a microprocessor compiling or processing the instructions sent out by various modules and connecting with the image-capture module; a register module connecting with the microprocessor and temporarily storing the images captured by the image-capture module; a memory card module connecting with an external memory card and the microprocessor and controlled by the microprocessor to permanently store the data, which is originally stored in the register module, in the memory card; and an I/O module connecting with the microprocessor and controlling whether the display module operates or not.

The vibration sensation module is arranged in one of the accommodation spaces of the second casing and connects with the driving module. When detecting a vibration exceeding a given intensity, the vibration sensation module enables the driving module to operate.

The power supply module is arranged in one of the accommodation spaces of the second casing and connects with the module board.

The cover board is assembled to one side of the second casing, which is opposite to the first casing, and has an assembly through-hole.

The plate-like member has a plate through-hole and is assembled to the assembly member of the second casing via the assembly through-hole.

A second objective of the present invention is to provide a home surveillance device, wherein a thermal sensation module and a thermal sensation signal receiving module are arranged in the home surveillance device, and wherein the thermal sensation module detects an object having temperature within a given range (such as body temperature), transmits a signal to the thermal sensation signal receiving module when detecting an object having a temperature within the given range, and triggers the home surveillance device to capture images or sounds, or enables the home surveillance device to be operated by the user from a far end. The home surveillance device of the present invention comprises a body, a module board, a power supply module, a cover board, a plate-like member, and a thermal sensation signal receiving module.

The body includes a housing having a first casing and a second casing assembled to the first casing, wherein the first casing has a control interface, and wherein the second casing has a plurality of accommodation spaces, an assembly member and a casing through-hole.

The module board is arranged inside the housing and has an image-capture module capturing images; a display module presenting the images captured by the image-capturing module and the menus of the control interface; a driving module connecting with the image-capture module and the display module and triggering the image-capture module and the display module according to an external signal; a microprocessor compiling or processing the instructions sent out by various modules and connecting with the image-capture module; a register module connecting with the microprocessor and temporarily storing the images captured by the image-capture module; a memory card module connecting with an external memory card and the microprocessor and controlled by the microprocessor to permanently store the data, which is originally stored in the register module, in the memory card; and an I/O module connecting with the microprocessor and controlling whether the display module operates or not.

The power supply module is arranged in one of the accommodation spaces of the second casing and connects with the module board.

The cover board is assembled to one side of the second casing, which is opposite to the first casing, and has an assembly through-hole.

The plate-like member has a plate through-hole and is assembled to the assembly member of the second casing via the assembly through-hole.

The thermal sensation signal receiving module is arranged in one of the accommodation spaces of the second casing, connects with the driving module, and has a wireless communication unit communicating with the thermal sensation module.

### BRIEF DESCRIPTION OF THE DRAWINGS

Fig. 1 is a front perspective view of a home surveillance device according to one embodiment of the present invention;
Fig.2 is a rear perspective view of a home surveillance device according to one embodiment of the present invention;
Fig.3 is a perspective exploded view of the structure disclosed in Fig.2;
Fig.4 is a perspective exploded view of the body of a home surveillance device according to one embodiment of the present invention;
Fig.5 is a diagram schematically showing a module board according to a first embodiment of the present invention; and
Fig.6 is a diagram schematically showing a module board according to a second embodiment of the present invention.

### DETAILED DESCRIPTION OF THE INVENTION

The home surveillance device of the present invention is described in detail in cooperation with the drawings below. The specification of the present invention discloses two embodiments, which are different in the functions of the module boards. Thereinafter, the connection method of the external structure of the present invention is described beforehand. Then are described the differences of the two embodiments.

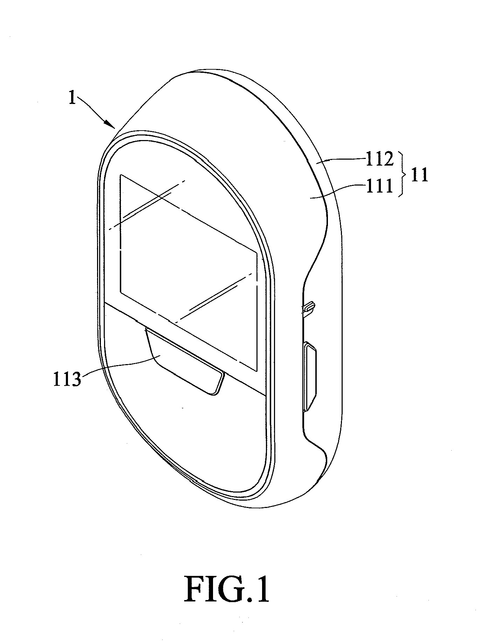

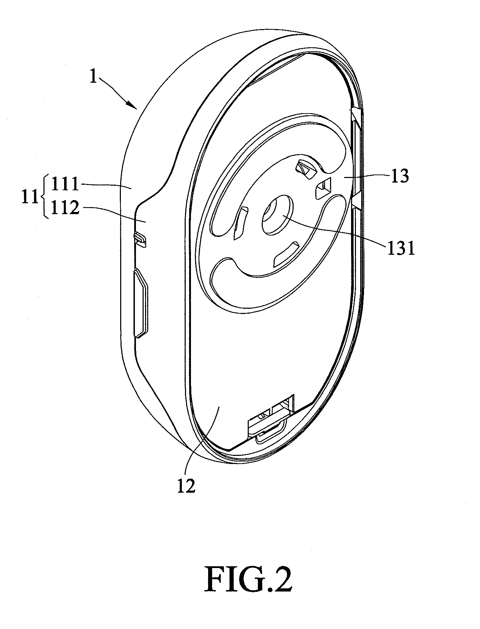

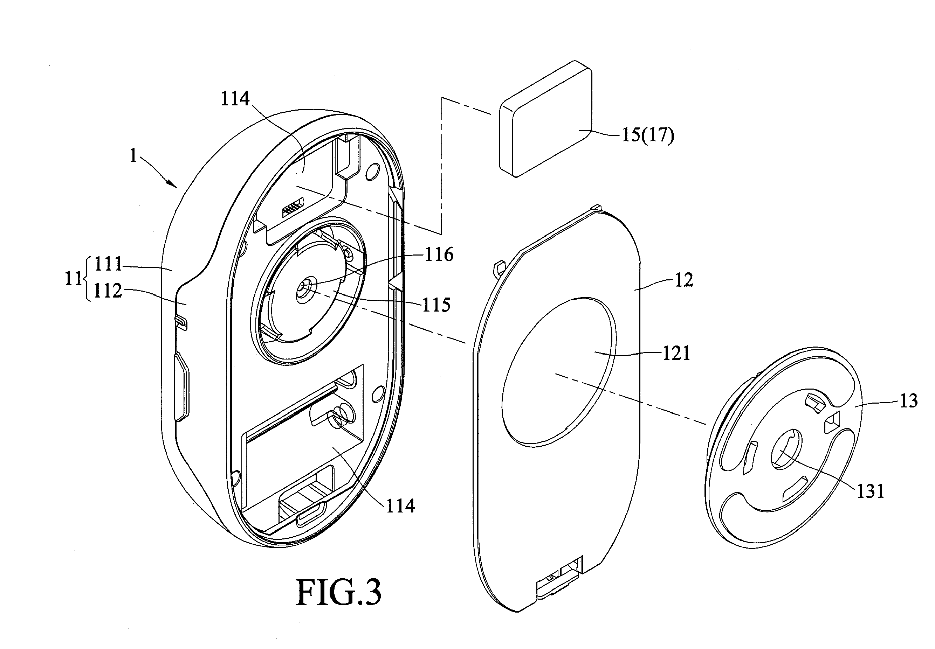

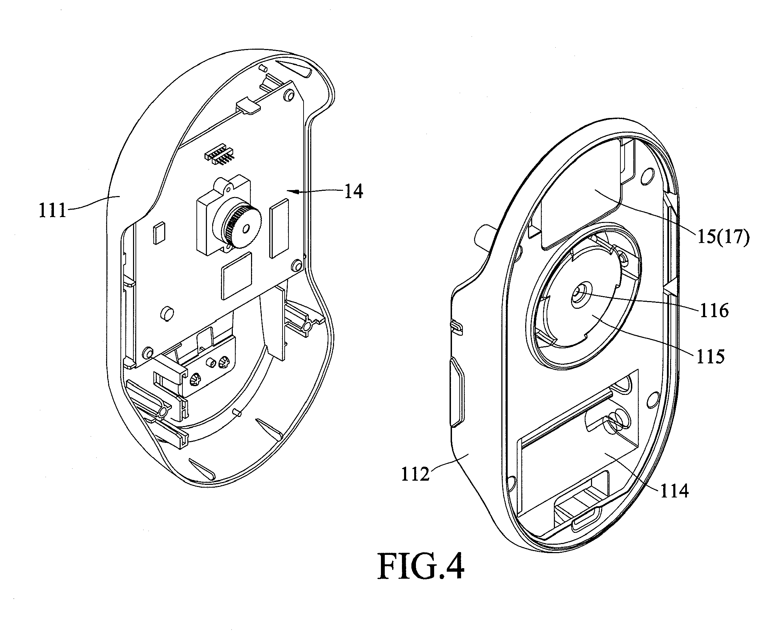

Refer to Fig.1 and Fig.2 respectively a front perspective view and a rear perspective view of a home surveillance device according to one embodiment of the present invention. Also refer to Fig.3 and Fig.4 respectively a perspective exploded view of the structure disclosed in Fig.2 and a perspective exploded view wherein some components are not shown. The basic structure of the home surveillance device is described herein. The home surveillance device of the present invention comprises a body 1, a cover board 12, and a plate-like member 13, a module board 14, a vibration sensation module 15, a power supply module 16. The body 1 includes a housing 11 having a first casing 111 and a second casing 112 assembled to the first casing 111. The first casing 111 has a control interface 113. The second casing 112 has at least one accommodation space 114, an assembly member 115 and a casing through-hole 116. The cover board 12 is assembled to one side of the second casing 112, which is opposite to the first casing 111. The cover board 12 has an assembly through-hole 121. The plate-like member 13 has a plate through-hole 131 and can be assembled to the assembly member 115 of the second casing 112 via the assembly through-hole 121. A module board 14 is arranged inside the housing 11. The plate-like member 13 can be fixed to a through-hole of a door, and the body 1 is assembled to the plate-like member 13 from the other side of the door via the assembly member 115. Thereby, the body 1 is fixed to the door.

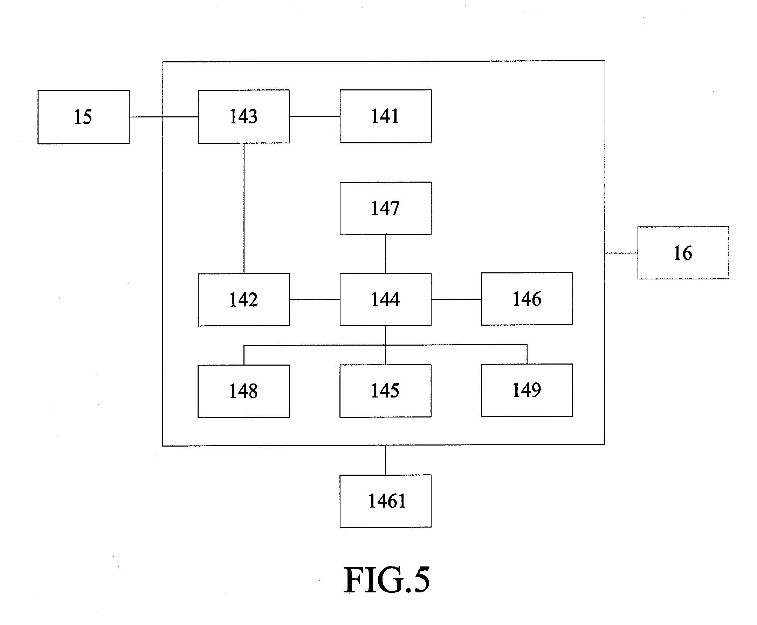

The connection method of the external structure of the present invention has been described in detail hereinbefore. A first embodiment of the present invention is to be fully described below. Refer to Fig.5 a diagram schematically showing a module board according to a first embodiment of the present invention. The module board 14 includes an image-capture module 141, a display module 142, and a driving module 143, a microprocessor 144, a register module 145, a memory card module 146, an I/O module 147, a timer module 148, and an audio module 149. The image-capture module 141 is used to capture images. The lens of the image-capture module 141 extends outwards through the casing through-hole 116, the assembly through-hole 121 and the plate through-hole 131 to capture the images outside the door. The image-capture module 141 can capture static or dynamic images automatically or according to the programmed instructions. The user may also operate the image-capture module 141 to capture images manually. The display module 142 presents the images captured by the image-capture module 141 or the menus of the control interface 113. The display module 142 may be integrated with the control interface 113 to form a touchscreen. The driving module 143 connects with the image-capture module 141 and the display module 142 and turns on the image-capture module 141 and the display module 142 according to an external signal. The microprocessor 144 complies or processes the instructions sent put by various modules and connects with the image-capture module 141. The register module 145 connects with the microprocessor 144. While the image-capture module 141 captures an image, the microprocessor 144 converts the image into data having a generally readable form and stores the data in the register module 145. The memory card module 146 connects with the microprocessor 144 and may connect with an external memory card 1461. The user may use the control interface 113 to control the microprocessor 144 to store the data, which is originally stored in the register module 145, in the memory card 1461 permanently. Alternatively, the microprocessor 144 may be programmed to automatically store the data of the register module 145 in the memory card 1461 permanently. The memory card 1461 may be a memory card belonging to one of the following specifications: SMC, CF, xD, MMC, RS-MMC, SD, MS, MS Duo, Mini SD, and Micro SD. The I/O module 147 connects with the microprocessor 144 and controls the operation of the display module 142. The I/O module 147 can use the control interface 113 to control the display module 142. The timer module 148 connects with the microprocessor 144 and starts to work when the display module 142 is turned on. If the user has not operated the control interface 113 for a given period of time, the timer module 148 turns off the display module 142. The audio module 149 connects with the microprocessor 144 and is used to record the voice messages left by the visitors and play the voice messages the user recorded beforehand. The user may use the control interface 113 to record or play voice messages.

The vibration sensation module 15 is arranged in the accommodation space 114 of the second casing 112 and connects with the driving module 143. When detecting a vibration exceeding a given intensity (such as doorbell ringing, door knocking, or other types of vibrations defined by the user), the vibration sensation module 15 enables the driving module 143 to turn on the image-capture module 141 and the display module 142. The power supply module 16 connects with the module board 14 and supplies power to the module board 14. The power supply module 16 is an AC power source or a battery.

The display module 142 may further transmit the images to an electronic device having a display in a wireless or wired way. The electronic device may be a mobile phone, a notebook computer, a tablet computer, a digital photo frame, or a monitor. The display module 142 may also transmit the images to a far-end receiver in form of a file or an e-mail via a network or a wireless communication method so as to store the images in the far-end receiver.

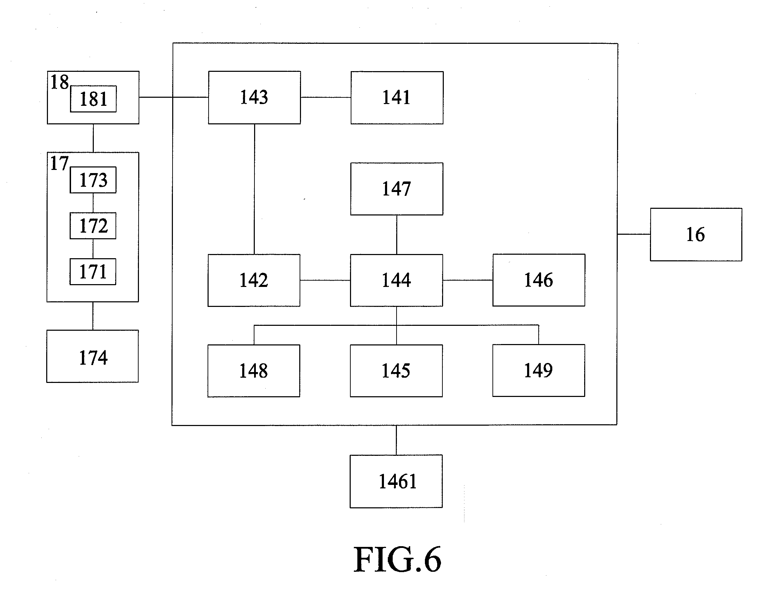

Refer to Fig.6 a diagram schematically showing a module board according to a second embodiment of the present invention. The second embodiment is different from the first embodiment in that the module board of the second embodiment has a thermal sensation module 17 and a thermal sensation signal receiving module 18 that replaces the vibration sensation module 15 in the module board 14 of the first embodiment. Below are described the structures and operations of the thermal sensation module 17 and the thermal sensation signal receiving module 18. The thermal sensation module 17 includes a thermal sensation unit 171 able to detect an object having temperature within a given range; a microprocessor unit 172 connecting with the thermal sensation unit 171 and processing the instructions sent out by various units of the thermal sensation module 17; a wireless communication unit 173 connecting with the microprocessor unit 172; and a power supply unit 174 supplying power to the thermal sensation module 17. When an object enters the detection area of the thermal sensation unit 171, the thermal sensation unit 171 verifies the temperature of the object. If the object has a temperature of human being or animals, the thermal sensation unit 171 transmits a signal to the microprocessor unit 172. Then, the microprocessor unit 172 further transmits a signal to the wireless communication unit 173.

The thermal sensation signal receiving module 18 is arranged in the accommodation space 114 of the second casing 112, connects with the driving module 143, and has a wireless communication unit 181 able to wirelessly communicate with the wireless communication unit 173. The communication of the wireless communication unit 181 is implemented by one of the following technologies: 2.4G, Zigbee, WiMAX, and WiFi. When the thermal sensation unit 171 sends a signal to the wireless communication unit 181 via the wireless communication unit 173, the thermal sensation signal receiving module 18 enables the driving module 143 to turn on the image-capture module 141 and the display module 142. The operations succeeding to capturing images are similar to those in the first embodiment. Besides, the signal of the thermal sensation unit 171 may be transmitted to an electronic device that the user carry about everywhere, whereby the user can learn that an object has entered the detection area of the thermal sensation unit 171.

The images presented by the display module 142 may be further transmitted to a far-end electronic device having a display in a wired or wireless way. The electronic device may be a mobile phone, a notebook computer, a tablet computer, a digital photo frame, or a monitor. The display module 142 may also transmit the images to a far-end receiver in form of a file or an e-mail via a network or a wireless communication method so as to store the images in the far-end receiver.

The present invention has been fully disclosed hereinbefore. In conclusion, the present invention has the following advantages:
1. The vibration sensation module can detect vibration of the door or doorbell ringing and enable the image-capture module to capture images of visitors automatically or via manual operation, whereby the present invention not only can inform the user of the arrival of a visitor but also can prevent from theft.
2. The thermal sensation module can detect the object having temperature of human beings or animals and enable the image-capture module to capture images of visitors automatically or via manual operation.

The embodiments described above are only to exemplify the present invention but not to limit the scope of the present invention. Any equivalent modification or variation according to the spirit of the present invention is to be also included within the scope of the present invention.

## Claims

1. A home surveillance device comprising
a body including a housing having a first casing and a second casing assembled to said first casing, wherein said first casing has a control interface, and wherein said second casing has at least one accommodation space, an assembly member and a casing through-hole;
a module board arranged inside said housing and including
an image-capture module capturing images;
a display module presenting images captured by said image-capture module and menus of said control interface;
a driving module connecting with said image-capture module and said display module and turning on said image-capture module and said display module according to an external signal;
a microprocessor compiling or processing instructions sent out by various modules and connecting with said image-capture module;
a register module connecting with said microprocessor and temporarily storing images captured by said image-capture module;
a memory card module able to connect with an external memory card, connecting with said microprocessor, and controlled by said microprocessor to store data of said register module in said external memory card permanently; and
an I/O module connecting with said microprocessor and controlling operation of said display module;
a vibration sensation module arranged in said accommodation space of said second casing, connecting with said driving module, and transmitting a signal to enable said driving module when detecting a vibration exceeding a given intensity;
a power supply module connecting with said module board and supplying power to the entire system;
a cover board assembled to one side of said second casing, which is opposite to said first casing, and having an assembly through-hole; and
a plate-like member having a plate through-hole and assembled to said assembly member of said second casing via said assembly through-hole, wherein a lens of said image-capture module extends outwards through said casing through-hole, said assembly through-hole and said plate through-hole to capture images.

2. The home surveillance device according to claim 1, wherein said plate-like member is fixed to a through-hole of a wall, and wherein said body is assembled to said plate-like member via said assembly member from another side of said wall, whereby said body is fixed to said wall.

3. The home surveillance device according to claim 1, wherein said module board further comprises a timer module, and wherein said timer module automatically turns off said display module if said control interface has not been operated for a given period of time.

4. The home surveillance device according to claim 1, wherein said module board further comprises an audio module recording and playing audio signals.

5. The home surveillance device according to claim 1, wherein said display module is integrated with said control interface to form a touchscreen.

6. The home surveillance device according to claim 1, wherein said memory card is an SMC card, a CF card, an xD card, an MMC card, an RS-MMC card, an SD card, an MS card, an MS Duo card, an Mini SD card, or a Micro SD card.

7. The home surveillance device according to claim 1, wherein vibration detected by said vibration sensation module is originated from doorbell ringing or door knocking.

8. The home surveillance device according to claim 1, wherein said power supply module is connected with an external battery or an external alternating current source.

9. A home surveillance device comprising
a body including a housing having a first casing and a second casing assembled to said first casing, wherein said first casing has a control interface, and wherein said second casing has at least one accommodation space, an assembly member and a casing through-hole;
a module board arranged inside said housing and including
an image-capture module capturing images;
a display module presenting images captured by said image-capture module and menus of said control interface;
a driving module connecting with said image-capture module and said display module and turning on said image-capture module and said display module according to an external signal;
a microprocessor compiling or processing instructions sent out by various modules and connecting with said image-capture module;
a register module connecting with said microprocessor and temporarily storing images captured by said image-capture module;
a memory card module able to connect with an external memory card, connecting with said microprocessor, and controlled by said microprocessor to store data of said register module in said external memory card permanently; and
an I/O module connecting with said microprocessor and controlling operation of said display module;
a power supply module arranged in said accommodation space of said second casing and connecting with said module board;
a cover board assembled to one side of said second casing, which is opposite to said first casing, and having an assembly through-hole; and
a plate-like member having a plate through-hole and assembled to said assembly member of said second casing via said assembly through-hole, wherein a lens of said image-capture module extends outwards through said casing through-hole, said assembly through-hole and said plate through-hole to capture images; and
a thermal sensation signal receiving module arranged in said accommodation space of said second casing, connecting with said driving module, sending a signal to enable said driving module, and having a wireless communication unit transmitting signals wirelessly.

10. The home surveillance device according to claim 9, wherein said plate-like member is fixed to a through-hole of a wall, and wherein said body is assembled to said plate-like member via said assembly member from another side of said wall.

11. The home surveillance device according to claim 9, wherein said module board further comprises a timer module, and wherein said timer module automatically turns off said display module if said control interface has not been operated for a given period of time.

12. The home surveillance device according to claim 9, wherein said module board further comprises an audio module recording and playing audio signals.

13. The home surveillance device according to claim 9, wherein said display module is integrated with said control interface to form a touchscreen.

14. The home surveillance device according to claim 9, wherein said memory card is an SMC card, a CF card, an xD card, an MMC card, an RS-MMC card, an SD card, an MS card, an MS Duo card, an Mini SD card, or a Micro SD card.

15. The home surveillance device according to claim 9, wherein said power supply module is connected with an external battery or an external alternating current source.

16. The home surveillance device according to claim 9 further comprising a thermal sensation module including
a thermal sensation unit able to detect an object having temperature within a given range;
a microprocessor unit connecting with said thermal sensation unit and processing instructions sent out by various units of said thermal sensation module;
a wireless communication unit connecting with said microprocessor unit and able communicate with said wireless communication unit of said thermal sensation signal receiving module; and
a power supply unit supplying power to said thermal sensation
module.

17. The home surveillance device according to claim 16, wherein said thermal sensation module detects objects having temperature of human beings or animals.

18. The home surveillance device according to claim 16, wherein communication of said wireless communication unit is implemented by one of following technologies: 2.4G, Zigbee, WiMAX, and WiFi.
